# EUROPEAN PATENT APPLICATION

(11) **EP 4 593 407 A1**
(43) Date of publication of application: **30.07.2025**
(21) Application number: 24221479.9
(22) Date of filing: 19.12.2024
(51) Int. Cl.: H04N 23/67, H04N 23/71, G02B 21/36, H04N 23/957

(54) **IN-FOCUS DEGREE ACQUISITION METHOD, OMNIFOCAL-IMAGE GENERATION METHOD, AND COMPUTER-READABLE PROGRAM**

(30) Priority: 26.01.2024 JP 2024009874
(71) Applicant: SCREEN Holdings Co., Ltd., Kyoto-shi, Kyoto 602-8585 (JP)
(72) Inventor: YASUDA, Takuya, Kyoto, 602-8585 (JP)
(74) Representative: Goddar, Heinz J.

(57) **Abstract**

Target images include a saturated image group where luminance of a predetermined local region is saturated, a first image group captured on one side in an optical axial direction, which is viewed from image capture positions of the saturated image group and toward which a displacement distance from an in-focus position increases. An in-focus degree acquisition method includes calculating, for each target image, a local in-focus degree indicating the degree of focusing on a local region in accordance with the luminance of the local image; correcting and lowering the local in-focus degree of the local region for the saturated image group; and correcting and lowering the local in-focus degree of the local region for one first image captured at an image capture position closest to the image capture positions of the saturated image group among the first image group.

## Description

### CROSS-REFERENCE TO RELATED APPLICATIONS

The present application claims the benefit of priority to Japanese Patent Application No. 2024-009874 filed on January 26, 2024, the entire contents of which are incorporated herein by reference.

### TECHNICAL FIELD

The present invention relates to a technique for acquiring a local in-focus degree for each of a plurality of target images, the local in-focus degree indicating the degree of focusing on a local region, the plurality of target images being a plurality of images of an image capture target each captured at a different displacement distance from an in-focus position.

### BACKGROUND ART

In recent year's research in medical or biological sciences, images that capture biological samples such as cells cultured in a culture medium are observed and analyzed for the purpose of, for example, elucidating disease mechanisms, biological mechanisms, or drug action mechanisms.

In a biological sample, cells or the like may be distributed three dimensionally within a culture medium, in which case it may be difficult to obtain images that focus on the biological sample as a whole. In view of this, Japanese Patent Application Laid-Open No. 2016-14974 (Document 1) proposes a technique for generating a so-called omnifocal image (also referred to as an in-focus image) by capturing a plurality of images at different in-focus positions in an optical axial direction, extracting portions with a high degree of focusing (i.e., in-focus portions) from each image in accordance with a change in the luminance of the image, and composing the extracted portions together.

Japanese Patent Application Laid-Open No. 2017-5593 (Document 2) and Japanese Patent Application Laid-Open No. 2021-135389 (Document 3) propose techniques for observing cells or the like that are being cultured in each well of a well plate, by applying illumination light to the cells or the like from above and causing an image capturer to receive light transmitted downward from the bottom surface of each well. Document 3 also proposes a technique for causing the image capturer to capture a plurality of images at different-focus positions in the optical axial direction, obtaining an in-focus degree that indicates the degree of focusing on each image, and identifying an appropriate image capture position based on the in-focus degree. To acquire the in-focus degree for each image, the local in-focus degrees of a plurality of local regions are calculated for the image, and the in-focus degree for the image is calculated based on the local in-focus degree of each local region.

Meanwhile, according to Document 3, the local in-focus degree of each local region is acquired based on the luminance of each pixel in the image. However, among the above-described images acquired at different in-focus positions, images that have been acquired on the side of light gathering by cells or the like in the optical axial direction and that have low degrees of focusing (i.e., out-of-focus images) may have the light collected by cells or the like spread out white and have saturated luminances over a wide range. In this case, the local in-focus degree of a local region for the out-of-focus images may be evaluated more highly than the local in-focus degrees of the local region for other regions. As a result, the in-focus degrees acquired for the out-of-focus images may be highly evaluated, and an incorrect in-focus position may be identified.

### SUMMARY OF THE INVENTION

The present invention is intended for a technique for acquiring a local in-focus degree for each of a plurality of target images, the local in-focus degree indicating the degree of focusing on a local region, the plurality of target images being a plurality of images of an image capture target each captured at a different displacement distance from an in-focus position.

Aspect 1 of the present invention is an in-focus degree acquisition method for acquiring a local in-focus degree for each of a plurality of target images, the local in-focus degree indicating a degree of focusing on a predetermined local region, the plurality of target images being a plurality of images of an image capture target each captured at a different displacement distance from an in-focus position. The plurality of target images includes a saturated image group in which luminance of the local region is saturated, a first image group captured on one side in an optical axial direction, viewed from image capture positions of the saturated image group, the one side being a side toward which the displacement distance from the in-focus position increases, and a second image group captured on the other side in the optical axial direction, viewed from the image capture positions of the saturated image group. The in-focus degree acquisition method includes a) calculating, for each of the plurality of target images, the local in-focus degree in accordance with the luminance of the local region, the local in-focus degree indicating the degree of focusing on the local region, b) correcting and lowering the local in-focus degree of the local region for each saturated image in the saturated image group, and c) correcting and lowering the local in-focus degree of the local region for one first image in the first image group, the one first image being captured at an image capture position that is closest to the image capture positions of the saturated image group.

The present invention allows favorable comparison of the local in-focus degree among the plurality of target images.

Aspect 2 of the present invention is the in-focus degree acquisition method according to Aspect 1, in which the operation c) further includes correcting and lowering the local in-focus degree for another first image in the first image group, the another first image being captured at an image capture position that is the second closest to the image capture positions of the saturated image group, next to the one first image, and a degree of decrease in the local in-focus degree for the another first image is less than a degree of decrease in the local in-focus degree for the one first image.

Aspect 3 of the present invention is the in-focus degree acquisition method according to Aspect 1 that further includes correcting and lowering the local in-focus degree for one second image in the second image group, the one second image being captured at an image capture position that is closest to the image capture positions of the saturated image group. A degree of decrease in the local in-focus degree for the one second image is less than a degree of decrease in the local in-focus degree for the one first image.

Aspect 4 of the present invention is the in-focus degree acquisition method according to Aspect 3, in which the operation c) further includes correcting and lowering the local in-focus degree for another first image in the first image group, the another first image being captured at an image capture position that is the second closest to the image capture positions of the saturated image group, next to the one first image, and a degree of decrease in the local in-focus degree for the another first image is less than the degree of decrease in the local in-focus degree for the one first image.

Aspect 5 of the present invention is the in-focus degree acquisition method according to any one of Aspects 1 to 4, in which each of the plurality of target images is a transparent image of the image capture target.

Aspect 6 of the present invention is an omnifocal-image generation method for generating an omnifocal image from a plurality of target images that are a plurality of images of an image capture target each captured at a different displacement distance from an in-focus position. The omnifocal-image generation method includes d) acquiring, for each of a plurality of local regions, a local in-focus degree for each of the plurality of target images by using the in-focus degree acquisition method according to any one of Aspects 1 to 4 (or according to any one of Aspects 1 to 5), the plurality of local regions being equivalent to each of the plurality of target images as a whole, and e) generating an omnifocal image by determining luminance of each of the plurality of local regions in accordance with the local in-focus degrees acquired for the plurality of target images.

Aspect 7 of the present invention is a computer-readable program for causing a computer to execute acquiring a local in-focus degree for each of a plurality of target images, the local in-focus degree indicating a degree of focusing on a predetermined local region, the plurality of target images being a plurality of images of an image capture target each captured at a different displacement distance from an in-focus position. The plurality of target images includes a saturated image group in which luminance of the local region is saturated, a first image group captured on one side in an optical axial direction, viewed from image capture positions of the saturated image group, the one side being a side toward which the displacement distance from the in-focus position increases, and a second image group captured on the other side in the optical axial direction, viewed from the image capture positions of the saturated image group. The program is executed by the computer to a) acquire, for each of the plurality of target images, the local in-focus degree in accordance with the luminance of the local region, the local in-focus degree indicating the degree of focusing on the local region, b) correct and lower the local in-focus degree of the local region for each saturated image in the saturated image group, and c) correct and lower the local in-focus degree of the local region for one first image in the first image group, the one first image being captured at an image capture position that is closest to the image capture positions of the saturated image group.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing one embodiment of a configuration of an image capturing device.
Fig. 2 is a perspective view showing one example of a well plate.
Fig. 3 is a diagram showing a configuration of a controller.
Fig. 4 is a block diagram showing a functional configuration of the controller.
Fig. 5 is a flowchart of processing for generating an omnifocal image.
Fig. 6 is an enlarged view showing part of the image capturing device.
Fig. 7 is a diagram showing a plurality of target images.
Fig. 8 is a diagram showing a plurality of target images.
Fig. 9A is a graph showing pre-correction local in-focus degrees.
Fig. 9B is a graph showing corrected local in-focus degrees.
Fig. 10 is a diagram showing an omnifocal image.
Fig. 11 is a diagram showing an omnifocal image according to a comparative example.
Fig. 12 is a flowchart showing part of the processing for generating an omnifocal image.
Fig. 13 is a graph showing corrected local in-focus degrees.
Fig. 14A is a graph showing pre-correction local in-focus degrees.
Fig. 14B is a graph showing corrected local in-focus degrees.
Fig. 14C is a graph showing corrected local in-focus degrees.

### DESCRIPTION OF EMBODIMENTS

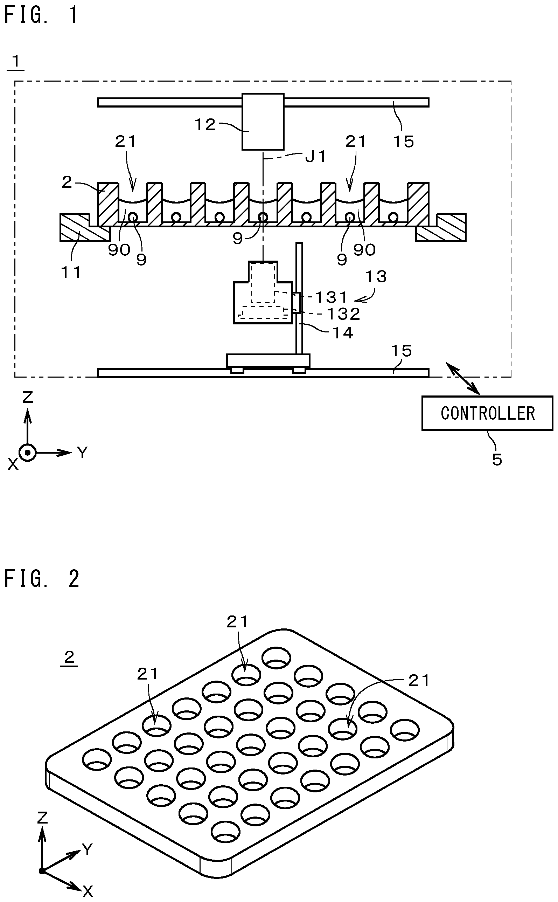

Fig. 1 is a diagram showing one embodiment of an image capturing device 1 that uses an in-focus degree acquisition method according to the present invention. Fig. 1 shows an overall configuration of the image capturing device 1. Fig. 2 is a perspective view showing one example of a well plate 2 used in the image capturing device 1. In Figs. 1 and 2, three directions orthogonal to one another are indicated as X, Y, and Z directions by arrows. In the examples shown in Figs. 1 and 2, the X and Y directions are horizontal directions perpendicular to each other, and the Z direction is a vertical direction (i.e., an up-down direction ).

The image capturing device 1 is a device that captures images of specimens 9 held in the well plate 2. The specimens 9 may, for example, be cells, cell clusters such as spheroids or organoids, or biological specimens such as bacteria. In the following description, cells, cell clusters, bacteria, and so on are also collectively referred to as "cells, etc."

The well plate 2 is an approximately flat plate-like specimen container. The well plate 2 is formed of a light conductive material (e.g., a transparent resin). The well plate 2 has one main surface provided with a plurality of recesses, namely, wells 21 (in the examples shown in Figs. 1 and 2, the main surface on the +Z side). For example, the wells 21 may be arranged at regular intervals in the X and Y directions. In plan view, for example, each well 21 may have an approximately circular shape. The number, arrangement, shape, and so on of the wells 21 in the well plate 2 may be appropriately changed.

Each well 21 of the well plate 2 stores a specimen 9, which is an image capture target of the image capturing device 1, together with a liquid or gel culture medium 90. The specimen 9 may, for example, be a cell, etc. having light conductivity and cultured under predetermined culture conditions within the culture medium 90. Note that the image capturing device 1 may be used to capture images of specimens 9 that are stored in a flat specimen container called a dish, instead of those stored in the well plate 2.

The image capturing device 1 includes a holder 11, an illuminator 12, an image capturer 13, an elevating mechanism 14, a movement mechanism 15, and a controller 5. The holder 11 is a retainer that holds the well plate 2. The holder abuts on the peripheral edge portion of the -Z-side main surface (i.e., lower surface) of the well plate 2 from the underside and holds the well plate 2 in an approximately horizontal position.

The illuminator 12 is arranged above the holder 11 and emits illumination light downward (i.e., toward the -Z side). The illumination light emitted from the illuminator 12 irradiates the well plate 2 held by the holder 11. Accordingly, the specimens 9 stored in the wells 21 are also irradiated with the illumination light from above (i.e., from the +Z side). The illuminator 12 includes a light source and an illumination optical system, both of which are not shown. As the light source, for example, a white light emitting diode (LED) may be used.

The image capturer 13 is arranged below the holder 11. The image capturer 13 includes an image-capturing optical system 131 and an image sensor 132. The image-capturing optical system 131 includes a plurality of optical elements (not shown) including an objective lens. The image-capturing optical system 131 has an optical axis J1 extending in approximately parallel with the Z direction (i.e., the up-down direction). The image sensor 132 is arranged below the image-capturing optical system 131. The image sensor 132 serves as an area image sensor that has a two-dimensional light-receiving surface. As the image sensor 132, for example, a charge coupled device (CCD) or a complementary metal oxide semiconductor (CMOS) may be used.

In the example shown in Fig. 1, the image capturer 13 is positioned vertically under one well 21 of the well plate 2. The illuminator 12 is positioned vertically above the one well 21 to face the image capturer 13 in the up-down direction with the one well 21 sandwiched therebetween. The illumination light emitted from the illuminator 12 enters the one well 21 from above and irradiates the specimen 9 stored in the well 21. The light transmitted down through the well plate 2 from the bottom surface of the well 21 (i.e., the -Z-side surface) enters the light-receiving surface of the image sensor 132 via the image-capturing optical system 131 of the image capturer 13. The image sensor 132 captures an image of the specimen 9 that is formed on the light-receiving surface by the image-capturing optical system 131. The image acquired by the image capturer 13 is a transparent image of the specimen 9.

In the image capture of the specimen 9, the elevating mechanism 14 moves the image capturer 13 in the Z direction (i.e., the optical axial direction) and adjusts the position of the image capturer 13 in the Z direction so that the specimen 9 is positioned in an in-focus position on the +Z side of the image capturer 13 (hereinafter, also simply referred to as the "in-focus position"). In other words, the elevating mechanism 14 adjusts the focus of the image capturer 13. In the generation of the omnifocal image which will be described later, the elevating mechanism 14 moves the image capturer 13 in the Z direction, and a plurality of images are acquired at different image capture positions of the image capturer 13 in the Z direction, as original images used for generation of the omnifocal image.

When the image capture of the specimen 9 in one well 21 ends, the illuminator 12 and the image capturer 13 are moved in the horizontal directions (i.e., the X and Y directions) by the movement mechanism 15 and arranged vertically above and below another well 21, respectively. Then, an image of the specimen 9 in the other well 21 is captured in approximately the same manner as described above. The movement mechanism 15 may move the illuminator 12 and the image capturer 13 either integrally or individually. In the image capturing device 1, the image capturer 13 may capture images of the specimens 9 stored in the wells 21 at the same time.

The controller 5 controls each constituent element of the image capturing device 1, such as the illuminator 12, the image capturer 13, the elevating mechanism 14, and the movement mechanism 15. The controller 5 also stores images acquired by the image capturer 13 and performs image processing on the acquired images.

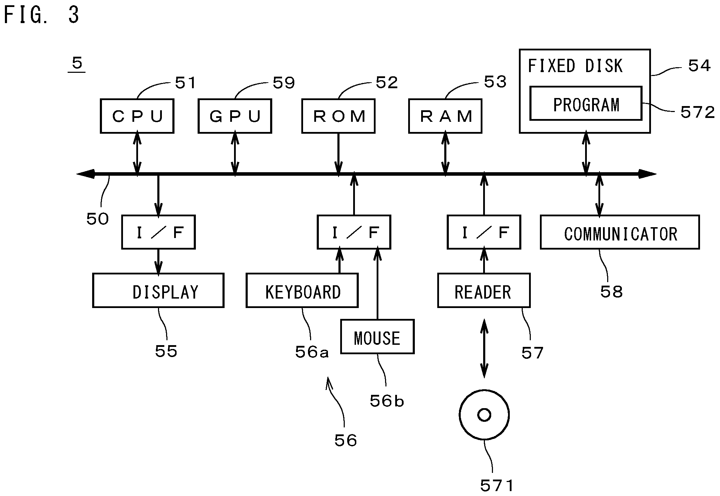

Fig. 3 is a diagram showing a configuration of a computer that functions as the controller 5. The computer is configured as a general computer system that includes a CPU 51, ROM 52, RAM 53, a fixed disk 54, a display 55, an input device 56, a reader 57, a communicator 58, a GPU 59, and a bus 50. The CPU 51 performs a variety of arithmetic processing. The GPU 59 performs a variety of arithmetic processing relating to image processing. The ROM 52 stores basic programs. The RAM 53 stores various types of information. The fixed disk 54 stores information. The display 55 is a display device that displays various types of information such as images.

The input device 56 includes a keyboard 56a and a mouse 56b that accept input from an operator. The reader 57 reads out information from a computer-readable recording medium 571 such as an optical disk, a magnetic disk, a magneto-optical disk, or a memory card. The display 55, the keyboard 56a, the mouse 56b, and the reader 57 are connected to the bus 50 via interfaces I/F. The communicator 58 transmits and receives signals to and from devices or the like outside the image capturing device 1. The bus 50 is a signal circuit that connects the CPU 51, the GPU 59, the ROM 52, the RAM 53, the fixed disk 54, the display 55, the input device 56, the reader 57, and the communicator 58.

In the image capturing device 1, the program 572 is read out in advance from the recording medium 571 via the reader 57 and stored in the fixed disk 54. The program 572 may be stored in the fixed disk 54 via the network. The CPU 51 and the GPU 59 perform arithmetic processing by using the RAM 53 and the fixed disk 54 in accordance with the computer-readable program 572. The CPU 51 and the GPU 59 function as operation parts in the image capturing device 1. The image capturing device 1 may adopt any other configuration that functions as an operation part, in addition to the CPU 51 and the GPU 59.

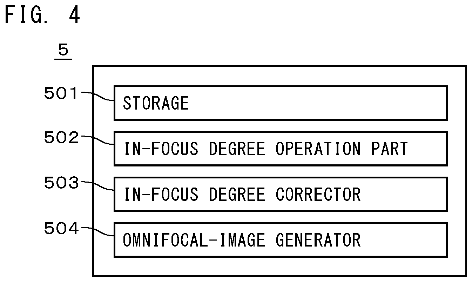

Fig. 4 is a block diagram showing functional configurations of the controller 5 achieved by the aforementioned computer executing arithmetic processing or the like in accordance with the program 572. These functional configurations include a storage 501, an in-focus degree operation part 502, an in-focus degree corrector 503, and an omnifocal-image generator 504. All or some of these functions may be realized by a dedicated electric circuit, or may be realized by a plurality of computers.

Among the functional configurations shown in Fig. 4, the storage 501 is mainly realized by the RAM 53 and the fixed disk 54. The in-focus degree operation part 502, the in-focus degree corrector 503, and the omnifocal-image generator 504 are realized by the CPU 51, the GPU 59, the ROM 52, the RAM 53, the fixed disk 54, and peripheral configurations thereof.

The storage 501 stores the images of the specimens 9 (hereinafter, also referred to as "target images") acquired by the image capturer 13 as digital image data. In the image capturing device 1, a plurality of target images are acquired at different image capture positions of the image capturer 13 in the Z direction and stored in the storage 501. The in-focus degree operation part 502 calculates the in-focus degree (hereinafter, also referred to as the "local in-focus degree") of each of a plurality of local regions that are set in each target image.

The in-focus degree is an indicator that indicates how much each target image focuses on the specimen 9 serving as an image capture target (i.e., the degree of focusing). In the case where the specimen 9 is positioned in approximately the in-focus position of the image capturer 13 in the optical axial direction, the specimen 9 is in focus and the in-focus degree is relatively high. On the other hand, in the case where the specimen 9 is displaced from the in-focus position of the image capturer 13 in the optical axial direction, the specimen 9 is out of focus and the in-focus degree is relatively low. The in-focus degree decreases with increasing distance in the optical axial direction between the position of the specimen 9 and the in-focus position of the image capturer 13 (i.e., the displacement distance of the specimen 9 from the in-focus position). On the other hand, the in-focus degree increases with decreasing displacement distance of the specimen 9 from the in-focus position.

A local region refers to a region that is set in each target image and that is smaller than the target image as a whole. In the present embodiment, a rectangular target image as a whole is divided into a plurality of rectangular segmented regions by grid segmentation lines, and each segmented region is referred to as a local region. The local regions are arranged in a matrix in the longitudinal and lateral directions of the target image. For example, the local regions may have approximately the same shape. Each local region may include a plurality of pixels of the target image, or one pixel may be referred to as one local region.

The local in-focus degree refers to the degree of focusing on the local region. That is, the local in-focus degree is an indicator that indicates how much the specimen 9 as an image capture target is focused on in one local region (i.e., the degree of focusing). In the case where the specimen 9 is positioned in approximately the in-focus position of the image capturer 13 in a local region, the local in-focus degree of the local region is relatively high. On the other hand, in the case where the specimen 9 is displaced from the in-focus position of the image capturer 13 in a local region, the local in-focus degree of the local region is usually low. The local in-focus degree decreases with increasing displacement distance of the specimen 9 from the in-focus position in the local region. On the other hand, the local in-focus degree increases with decreasing displacement distance of the specimen 9 from the in-focus position in the local region.

As described above, cells, etc. that configure the specimens 9 may be distributed three-dimensionally within the wells 21 shown in Fig. 1. In this case, the local in-focus degree may vary depending on the local region of one target image. In other words, one target image may be in such a state that part of the specimen 9 is in focus, and the other part of the specimen 9 is out of focus.

The in-focus degree corrector 503 corrects the local in-focus degrees of the local regions for each target image as necessary. The omnifocal-image generator 504 generates an omnifocal image of the specimen 9 from the above-described target images in accordance with the corrected local in-focus degrees acquired for each target image. The omnifocal image refers to an image in which every portion of the specimen 9 is in focus.

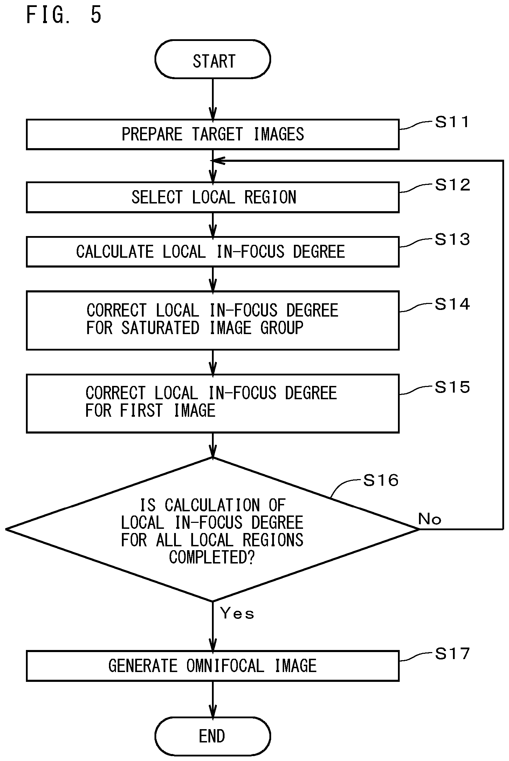

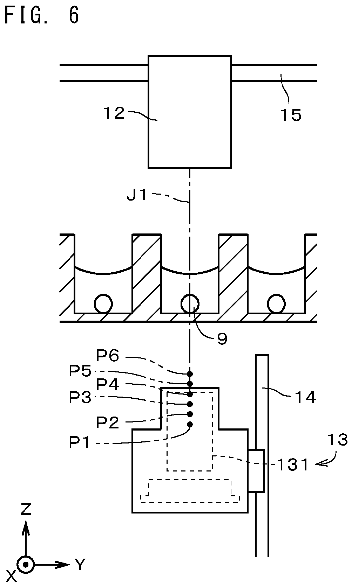

Next, the generation of the omnifocal image by the image capturing device 1 is described with reference to Figs. 5 and 6. Fig. 5 is a flowchart of processing for generating an omnifocal image. Fig. 6 is an enlarged view showing part of the image capturing device 1.

In the image capturing device 1, firstly, the controller 5 (see Fig. 1) drives the movement mechanism 15 so as to position the illuminator 12 and the image capturer 13 above and below one well 21, respectively. The controller 5 then drives the elevating mechanism 14 so as to adjust the position of the image capturer 13 in the up-down direction. Then, the controller 5 controls the image capturer 13 so as to acquire a target image of a specimen 9. The target image acquired by the image capturer 13 is transmitted to and stored in the storage 501 (see Fig. 4).

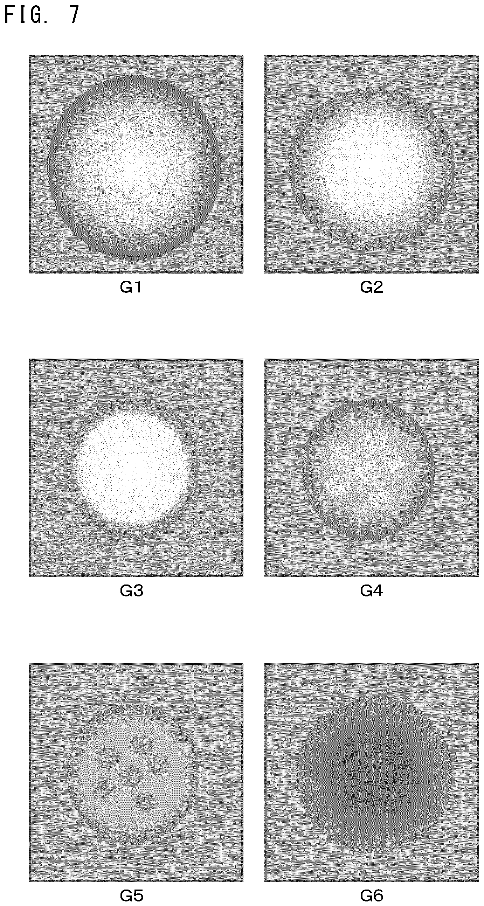

In the image capturing device 1, the elevating mechanism 14 changes the position of the image capturer 13 in the up-down direction, and the image capturer 13 repeatedly captures an image of the specimen 9 (i.e., acquires a target image). In the present embodiment, the image capturer 13 captures images of the specimen 9 when its objective lens (not shown) is positioned at six positions P1 to P6 in the up-down direction, indicated by black circles in Fig. 6, so that target images G1 to G6 shown in Fig. 7 are acquired. In the example shown in Fig. 6, the positions P1 to P6 are aligned at regular intervals in the up-down direction (i.e., Z direction). In the following description, the positions P1 to P6 are also referred to as the "image capture positions P1 to P6." The interval in the up-down direction between each pair of adj acent image capture positions among the image capture positions P1 to P6 is assumed to be "d."

The target image G1 shown in Fig. 7 is acquired when the objective lens of the image capturer 13 is positioned at the image capture position P1 in the up-down direction, and the target image G2 is acquired when the objective lens is positioned at the image capture position P2 in the up-down direction. The target image G3 is acquired when the objective lens of the image capturer 13 is positioned at the image capture position P3 in the up-down direction, and the target image G4 is acquired when the objective lens is positioned at the image capture position P4 in the up-down direction. The target image G5 is acquired when the objective lens of the image capturer 13 is positioned at the image capture position P5 in the up-down direction, and the target image G6 is acquired when the objective lens is positioned at the image capture position P6 in the up-down direction.

In the example shown in Fig. 7, when the objective lens is positioned at the image capture position P4, the in-focus position of the image-capturing optical system 131 of the image capturer 13 (i.e., the in-focus position on the +Z side) is approximately the same as the position of the specimen 9 in the up-down direction. In other words, the target image G4 is an image (i.e., an in-focus image) acquired when the specimen 9 is positioned at approximately the in-focus position of the image-capturing optical system 131. Thus, the specimen 9 in the image G4 is relatively clear and relatively bright.

In the example shown in Fig. 7, when the objective lens is positioned at each of the image capture positions P1 to P3, the in-focus position of the image-capturing optical system 131 is on the -Z side of the specimen 9. In other words, the specimen 9 is on the +Z side of the image-capturing optical system 131 away from the in-focus position of the image-capturing optical system 131. In this case, the peripheral portion of the specimen 9 in each of the target images G1 to G3 becomes dark due to the lens effect of the specimen 9 with light conductivity (i.e., the luminance of the peripheral portion decreases). The central portion of the specimen 9 in each of the target images G1 to G3 is bright due to gathering of the light transmitted through the specimen 9 (i.e., the luminance of the central portion increases). In particular, in the target images G2 and G3, the luminance of the central portion of the specimen 9 is saturated over a wide range (so-called, blown out and highlighted).

The term "saturated" described above refers to a state in which the luminance of pixels (i.e., pixel values) in the target image has tones in the vicinity of a maximum tone. In the present embodiment, each pixel in the target images is expressed in 256 levels of gray (i.e., 0 to 255), and the term "saturated" described above refers to a state in which the luminance of each pixel has a 255-tone level or a tone level within a predetermined range in the vicinity of the 255-tone level. The predetermined range is 80% or more of the tone level (256 levels of gray) of each pixel. In the present embodiment, the luminance of each pixel is assumed to be saturated when the luminance of the pixel is in the range of 205- to 255-tone level.

The image capture position P1 corresponding to the target image G1 is on the -Z side (i.e., the side on which the light transmitted through the specimen 9 is gathered), viewed from the image capture positions P2 and P3 corresponding to the target images G2 and G3 in which the luminance of the central portion of the specimen 9 is saturated. Thus, in the target image G1, the luminance of the central portion of the specimen 9 is not as high as saturated, but relatively high.

Meanwhile, when the objective lens is positioned at each of the image capture positions P5 and P6, the in-focus position of the image-capturing optical system 131 is on the +Z side of the specimen 9. In other words, the specimen 9 is located closer to the image-capturing optical system 131 than to the in-focus position of the image-capturing optical system 131. In this case, the peripheral portion of the specimen 9 in each of the target images G5 and G6 becomes bright due to the lens effect of the specimen 9 (i.e., the luminance of the peripheral portion increases). The central portion of the specimen 9 in each of the target images G5 and G6 becomes dark (i.e., the luminance of the central portion decreases).

As described above, when the objective lens is positioned at each of the image capture positions P1 to P3, P5, and P6, the in-focus position of the image-capturing optical system 131 is displaced from the specimen 9 in the Z direction. In the following description, the amount of displacement of the specimen 9 from the in-focus position in the Z direction is referred to as the "displacement distance" that serves as an indicator representing the displacement of the specimen including direction. The displacement distance represents the position of the specimen 9 relative to the in-focus position in the Z direction.

For example, when the objective lens is positioned at the image capture position P1, the displacement distance of the specimen 9 from the above-described in-focus position is "+3d." When the objective lens is positioned at the image capture positions P2 and P3, the displacement distances of the specimen 9 from the above in-focus position are "+2d" and "+d," respectively. Meanwhile, when the objective lens is positioned at the image capture positions P5 and P6, the displacement distances of the specimen 9 from the above in-focus position are "-d" and "-2d," respectively.

The target images G1 to G6 acquired by the image capturer 13 are transmitted to and stored in the storage 501. In this way, the target images G1 to G6 of the specimen 9 captured at different displacement distances from the in-focus position are prepared (step S11). In step S11, noise removal processing may be performed on the target images G1 to G6 acquired by the image capturer 13, and the target images G1 to G6 that have undergone the processing may be stored in the storage 501. The noise removal processing may be performed by any of various known methods (e.g., opening processing for performing expansion processing after contraction processing). Note that the number of target images prepared in step S11 and the image capture positions may be appropriately changed.

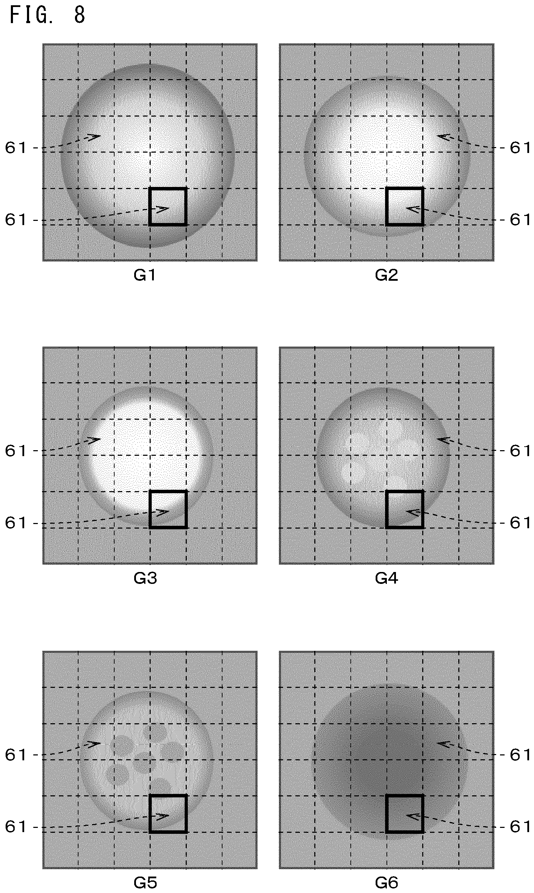

Then, as shown in Fig. 8, each of the target images G1 to G6 as a whole is divided into a plurality of (e.g., 36) rectangular segmented regions by lattice segmentation lines indicated by broken lines, and each segmented region is set as one local region 61. The local regions 61 are arranged in a matrix in the longitudinal and lateral directions of the target images G1 to G6 (in the present embodiment, a 6-by-6 matrix). In the example shown in Fig. 8, all of the local regions 61 of the target images G1 to G6 have approximately the same square shape. Each local region 61 includes a plurality of pixels. Note that each local region 61 may be a region that includes only one pixel. Although, in the target images G1 to G6, local regions 61 that are located at the same position have the same shape, a plurality of local regions 61 included in each target image do not necessarily have to have the same shape, and may include local regions that have different shapes.

Then, one local region 61 is selected from each of the target images G1 to G6, the one local regions 61 being located at the same position (step S12). In the example shown in Fig. 8, the local region 61 that is the fourth region from the left and the second region from the bottom is selected from each of the target images G1 to G6. In Fig. 8, the selected local regions 61 are enclosed and indicated by thick lines.

Then, the luminance of each pixel included in the selected local region 61 is acquired for each of the target images G1 to G6. Then, the in-focus degree operation part 502 (see Fig. 4) calculates, for each of the target images G1 to G6, the in-focus degree (i.e., the local in-focus degree) of the local region 61 in accordance with the luminance of the local region 61 (step S13).

The local in-focus degree may be calculated by using any of various known methods. For example, the local in-focus degree may be assumed to be an indicator value responsive to the luminances of pixels configuring the local region 61. The indicator value may, for example, be a maximum or minimum luminance of the pixels configuring the local region 61, or may be an arithmetical mean of the luminances of all of the pixels configuring the local region 61. The indicator value may also be a contrast of luminances in the local region 61 (i.e., a difference between the maximum and minimum luminances). The indicator value may also be the edge strength in the local region 61. The local in-focus degree may be a value obtained by multiplying the indicator value by a coefficient that corresponds to, for example, the area of the local region 61. As another alternative, the local in-focus degree may be calculated analytically from a histogram of the luminances of the pixels configuring the local region 61.

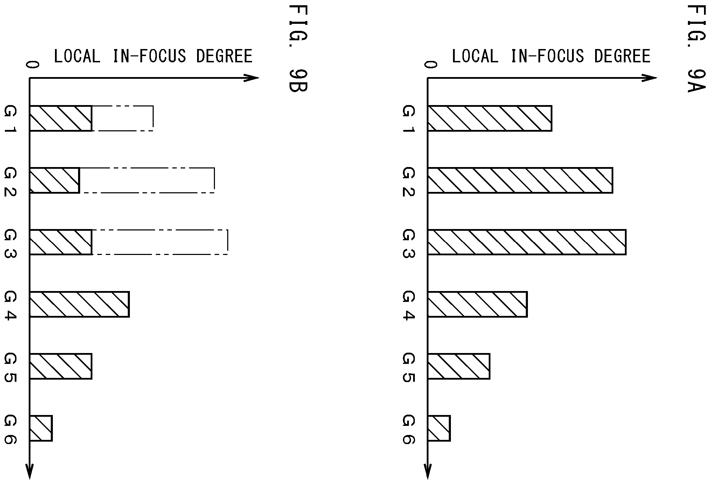

Fig. 9A is a graph showing the local in-focus degree of the local region 61 selected for each of the target images G1 to G6 in step S12 (i.e., pre-correction local in-focus degrees which will be described later). In Fig. 9A, the horizontal axis represents the target image (G1 to G6), and the vertical axis represents the pre-correction local in-focus degree. As described above, in the target images G2 and G3, the luminance of the central portion of the specimen 9 is saturated over a wide range due to the lens effect of the specimen 9 (see Fig. 8), so that the local in-focus degree of the aforementioned local region 61, which is located close to the central portion, is high. In the target image G1, the luminance of the central portion of the specimen 9 is also relatively high due to the lens effect of the specimen 9, so that the local in-focus degree of the aforementioned local region 61, which is located close to the central portion, is relatively high. On the other than, in the target images G4 to G6, the local in-focus degree decreases in specified order of the target images G4, G5, and G6 (i.e., with increasing displacement distance of the specimen 9 from the in-focus position).

When step S13 ends, the in-focus degree corrector 503 (see Fig. 4) checks, for each of the target images G1 to G6, whether the selected local region 61 includes a pixel whose luminance is saturated (such a pixel is hereinafter also referred to as a "saturated pixel"). For example, in the target image G1 and G4 to G6 in the example shown in Fig. 8, the selected local region 61 includes no saturated pixels. On the other hand, in the target images G2 and G3, the selected local region 61 includes saturated pixels.

In the case where the local region 61 includes a saturated pixel, the in-focus degree corrector 503 classifies the luminance of the local region 61 as being "saturated" and classifies the target images G2 and G3 including this local region 61 as "saturated images." In the following description, a group of saturated images is also referred to as a "saturated image group." In the present embodiment, the saturated image group includes the target images G2 and G3 as the saturated images.

On the other hand, in the case where the local region 61 includes no saturated pixels, the luminance of the local region 61 is classified as being "non-saturated," and the target images G1 and G4 to G6 including this local region 61 are classified as "non-saturated images." In the following description, among the non-saturated images, target images that are captured on one side in the optical axial direction (i.e., on the -Z side away from the specimen 9), viewed from the image capture positions of the saturated image group (i.e., the saturated images G2 and G3), are also referred to as "first images," and a group of first images is referred to as a "first image group," the one side being a side toward which the displacement distance of the specimen 9 from the in-focus position increases. Among the non-saturated images, target images that are captured on the other side in the optical axial direction (i.e., on the +Z side ) are also referred to as "second images," and a group of second images is referred to as a "second image group." In the present embodiment, the first image group includes the target image G1 as the first image. The second image group includes the target images G4 to G6 as the second images.

In this way, the target images G1 to G6 prepared in step S11 include the saturated image group (i.e., the target images G2 and G3), the first image group (i.e., the target image G1), and the second image group (i.e., the target images G4 to G6). The number of target images included in each of the saturated image group, the first image group, and the second image group may be changed to various values. The number of target images included in each of the saturated image group, the first image group, and the second image group that correspond to one local region 61 may vary depending on the position of the local region 61 in the target images G1 to G6.

The in-focus degree corrector 503 corrects the local in-focus degree of the selected local region 61 for each of the target images G1 to G6 in accordance with whether the luminance of the local region 61 is saturated. Specifically, firstly, in the saturated image group (i.e., the target images G2 and G3) in which the selected local region 61 is saturated state, the local in-focus degree of the local region 61 is corrected and lowered by a predetermined correction method (step S14). Then, one first image (i.e., target image G1) that is captured at an image capture position closest to the image capture positions (i.e., the image capture positions P2 and P3) of the saturated image group (i.e., the target image G1) is selected from the first image group. Then, the local in-focus degree of the local region 61 for the one first image is corrected and lowered by a predetermined correction method (step S15).

Fig. 9B is a graph showing the corrected local in-focus degree of the local region 61 selected for each of the target images G1 to G6 in step S12. In Fig. 9B, the horizontal axis represents the target image (G1 to G6), and the vertical axis represents the corrected local in-focus degree. In Fig. 9B, the pre-correction local in-focus degrees for the target images G1 to G3 are indicated by chain double-dashed lines.

The correction of the local in-focus degrees for the saturated image group (i.e., the target images G2 and G3) in step S14 may be carried out by, for example, subtracting a predetermined value (i.e., a predetermined amount of correction) from the local in-focus degrees or multiplying the local in-focus degrees by a predetermined correction coefficient that is greater than or equal to zero and less than one. The correction of the local in-focus degree for the one first image (i.e., the target image G1) in step S15 may also be carried out by, for example, subtracting a predetermined value (i.e., a predetermined amount of correction) from the local in-focus degrees or multiplying the local in-focus degrees by a correction coefficient that is greater than or equal to zero and less than one.

In the case where the correction of the local in-focus degrees in steps S14 and S15 is carried out by subtracting a predetermined amount of correction from the local in-focus degrees, the amount of correction in step S15 may, for example, be smaller than the amount of correction in step S14. In the case where the correction of the local in-focus degrees in steps S14 and S15 is carried out by multiplying the local in-focus degrees by a predetermined correction coefficient, the correction coefficient in step S15 may, for example, be greater than the correction coefficient in step S14.

Note that the above-described amount of correction in step S15 may also be greater than or equal to the amount of correction in step S14. The above-described correction coefficient in step S15 may also, for example, be smaller than or the same as the correction coefficient in step S14. Moreover, step S15 may be performed before or in parallel with step S14.

When steps S14 and S15 end, the controller 5 checks, for all of the local regions 61, whether the calculation and correction of the local in-focus degrees have ended (step S16). In the case where there is a local region 61 for which the calculation and correction of the local in-focus degrees have not ended, the processing returns to step S12, and the next one local region 61 is selected from among local regions 61 for which the calculation and correction of the local in-focus degrees have not ended (step S12). Then, for each of the target images G1 to G6, the local in-focus degree of the selected local region 61 is calculated in the same manner as described above (step S13), and the local in-focus degree of the local region 61 for each saturated image in the saturated image group and the local in-focus degree of the local region 61 for one first image in the first image group are corrected (steps S14 and S15).

The image capturing device 1 repeats the above-described processing in steps S12 to S16 until the calculation and correction of the local in-focus degrees for all of the local regions 61 have ended. Accordingly, the corrected local in-focus degrees of all of the local regions 61 are obtained for each of the target images G1 to G6. The corrected local in-focus degrees of the local regions 61 are transmitted to and stored in the storage 501 (see Fig. 4).

The omnifocal-image generator 504 (see Fig. 4) determines, for each of the target images G1 to G6, the luminance of each local region 61 in accordance with the corrected local in-focus degree of the local region 61 to generate an omnifocal image (step S17). Specifically, the corrected local in-focus degree of one local region 61 is compared among the target images G1 to G6. Then, the luminance of each pixel configuring the one local region 61 of the omnifocal image is determined based on the corrected local in-focus degrees acquired for the target images G1 to G6.

For example, the omnifocal-image generator 504 may set the luminance of each pixel in a local region 61 of the target image that has the maximum corrected local in-focus degree (in the example shown in Fig. 9B, the target image G4) as the luminance of each pixel in the local region 61 of the omnifocal image. Alternatively, the luminance of each pixel in a local region 61 of each of the target images G1 to G6 may be multiplied by a weighing factor responsive to the corrected local in-focus degree acquired for each of the target images G1 to G6, and an arithmetical mean value of the multiplied luminances (i.e., a weighted average value using the weighing factor) may be set as the luminance of each pixel in the local region 61 of the omnifocal image. The weighing factor is set to become larger as the corrected local in-focus degree increases. Thus, the luminance of each pixel in each local region 61 is set with higher weights assigned to the target images having higher local in-focus degrees. In the case where the corrected local in-focus degree is less than a predetermined threshold value, the weighing factor may be set to zero.

By performing the aforementioned processing on all of the local regions 61, the omnifocal-image generator 504 generates one omnifocal image based on the corrected local in-focus degrees by using the target images G1 to G6 as original images. This reduces the unintended influence of the saturated image group (i.e., the target images G2 and G3) in which luminance is saturated due to the lens effect of the specimen 9 and the unintended influence of the one first image (i.e., the target image G1) that is affected greatly by the above lens effect among the first image group. This also allows favorable generation of the omnifocal image.

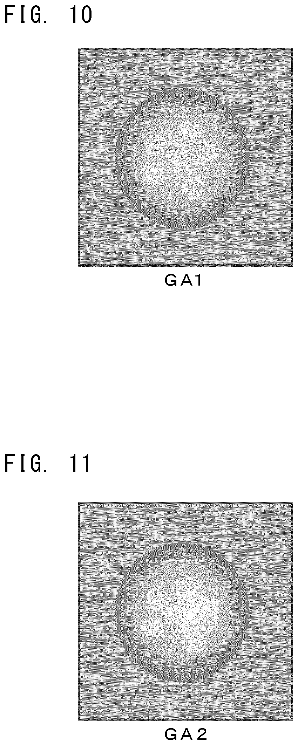

Fig. 10 is a diagram showing an omnifocal image GA1 generated based on the corrected local in-focus degrees as described above. Meanwhile, Fig. 11 shows an omnifocal image GA2 according to a comparative example in which the correction in steps S14 and S15 is not carried out (i.e., the omnifocal image generated based on the pre-correction local in-focus degrees). As compared with the omnifocal image GA2 according to the comparative example, the omnifocal image GA1 generated by using the in-focus degree acquisition method according to the present invention becomes a favorable image in which the specimen 9 as a whole is in focus and that reduces the influence of luminance saturation (i.e., blown-out highlights) caused by the lens effect of the specimen 9.

In the image capturing device 1, the in-focus degree operation part 502 and the in-focus degree corrector 503 configure the in-focus degree acquisition device that is capable of favorably acquiring the local in-focus degree of a local region 61 for each of the target images G1 to G6. The in-focus degree acquisition device and the omnifocal-image generator 504 configure the omnifocal-image generation device that generates the omnifocal image GA1 from the target images G1 to G6.

As described above, the aforementioned in-focus degree acquisition method is a method for acquiring the local in-focus degree for each of the target images G1 to G6, the local in-focus degree indicating the degree of focusing on a local region 61, the target images G1 to G6 being images of an image capture target (i.e., the specimen 9) each captured at a different displacement distance from the in-focus position. The target images G1 to G6 include the saturated image group (e.g., the target images G2 and G3), the first image group (e.g., the target image G1), and the second image group (e.g., the target images G4 to G6), the saturated image group being a group in which the luminance of a predetermined local region 61 is saturated, the first image group being captured on one side in the optical axial direction (in the above-described example, on the -Z side), viewed from the image capture positions of the saturated image group, the one side being a side toward which the displacement distance from the in-focus position increases, and the second image group being a group captured on the other side in the optical axial direction (in the above-described example, on the +Z side), viewed from the image capture positions of the saturated image group.

The above-described in-focus degree acquisition method includes the step of calculating, for each of the target images G1 to G6, the local in-focus degree of a local region 61 in accordance with the luminance of the local region 61, the local in-focus degree indicating the degree of focusing on the local region 61 (step S13), the step of correcting and lowering the local in-focus degree of the local region 61 for each saturated image in the saturated image group (step S 14), and the step of correcting and lowering the local in-focus degree of the local region 61 for one first image in the first image group, the one first image being captured at the image capturing position closest to the image capturing positions of the saturated image group (step S15). By using the corrected local in-focus degrees, it is possible to reduce the influence of increase in luminance caused by the lens effect of the specimen 9 in the target images G1 to G3 and to allow favorable comparison of the local in-focus degrees among the target images G1 to G6.

Each of the target images G1 to G6 may preferably be a transparent image of the specimen 9. As described above, the in-focus degree acquisition method is capable of reducing the influence of increase in luminance caused by the lens effect of the specimen 9. Thus, the in-focus degree acquisition method is especially suitable for the acquisition of the local in-focus degrees for transparent images where the luminance is likely to increase due to the lens actin of the specimen 9. In the case of a transparent image, the in-focus degree acquisition method is especially suitable because it is easy to know which side in the up-down direction (i.e., either the +Z side or the -Z side) the light transmitted through the specimen 9 is gathered, viewed from the image capture positions P1 to P6 of the target images G1 to G6.

The aforementioned omnifocal-image generation method is a method for generating he omnifocal image GA1 from the target images G1 to G6, which are a plurality of images of an image capture target (i.e., specimen 9) each captured at a different displacement distance from the in-focus position. The omnifocal-image generation method includes the step of acquiring, for each of the local regions 61 that are equivalent to each of the target images as a whole, the local in-focus degree for each of the target images G1 to G6 by using the aforementioned in-focus degree acquisition method (step S12 to S16); and the step of generating the omnifocal image GA1 by determining, for each of the local regions 61, the luminance based on the local in-focus degrees acquired for the target images G1 to G6 (step S17). This reduces the influence of increase in luminance caused by the lens actin of the specimen 9 and allows favorable generation of the omnifocal image.

The aforementioned program 572 is a computer-readable program for causing a computer to execute acquiring the local in-focus degree for each of the target images G1 to G6, the local in-focus degree indicating the degree of focusing on a local region 61, the target images G1 to G6 being a plurality of images of an image capture target (i.e., the specimen 9) each captured at a different displacement distance from the in-focus position. The target images G1 to G6 include the saturated image group (e.g., the target images G2 and G3), the first image group (e.g., the target image G1), and the second image group (e.g., the target images G4 to G6), the saturated image group being a group in which the luminance of a predetermined local region 61 is saturated, the first image group being captured on one side in the optical axial direction (in the above-described example, on the -Z side), viewed from the image capture positions of the saturated image group, the one side being a side toward which the displacement distance from the in-focus position increases, the second image group being captured on the other side in the optical axial direction (in the above-described example, on the +Z side), viewed from the image capture positions of the saturated image group.

By executing the above-described program 572, the computer performs the step of calculating, for each of the target images G1 to G6, the local in-focus degree indicating the degree of focusing on a local region 61 in accordance with the luminance of the local region 61 (step S 13), the step of correcting and lowering the local in-focus degree of the local region 61 for each saturated image in the saturated image group (step S14), and the step of correcting and lowering the local in-focus degree of the local region 61 for one first image that is captured at an image capture position closest to the image capture positions of the saturated image group among the first image group (step S15). By using the corrected local in-focus degrees, it is possible to reduce the influence of increase in luminance in the target images G1 to G3 caused by the lens effect of the specimen 9 and to allow favorable comparison of the local in-focus degrees among the target images G1 to G6.

In the aforementioned example, correction is made on the local in-focus degrees for the saturated image group (i.e., the target images G2 and G3) and the local in-focus degree for one first image (i.e., the target image G1) that is captured at the image capture position closest to the image capture positions of the saturated image group among the first image group, whereas no correction is made on the local in-focus degrees for the second image group (i.e., the target images G4 to G6).

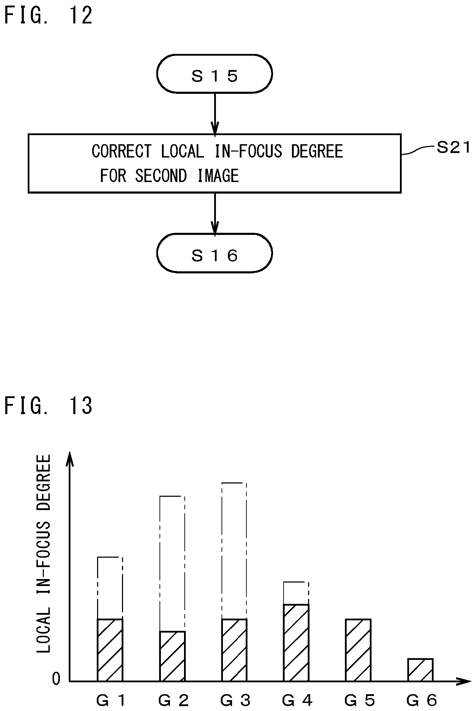

For example, the correction of the local in-focus degrees may also be made on second images included in the second image group, in addition to the saturated image group and the above-described one first image in the first image group. Specifically, following step S15, one second image (i.e., the target image G4) that is captured at an image capture position closest to the image capture positions of the saturated image group (i.e., the image capture positions P2 and P3) may be selected from the second image group as shown in Fig. 12. Then, the local in-focus degree of each local region 61 in the one second image may be corrected and lowered by using a predetermined correction method (step S21). Note that step S21 only needs to be performed before step S16, and may be performed before or in parallel with step S14 and/or step S15.

Fig. 13 is a graph showing the corrected local in-focus degrees of the local region 61 selected for each of the target images G1 to G6 in step S12. In Fig. 13, the horizontal axis represents the target image (G1 to G6), and the vertical axis represents the corrected local in-focus degree. In Fig. 13, the pre-correction local in-focus degrees acquired for the target image G1 to G4 are indicated by chain double-dashed lines. The correction of the local in-focus degree for the second image (i.e., the target image G4) in step S21 may be carried out by, for example, subtracting a predetermined value (i.e., the amount of correction) from the local in-focus degree or multiplying the local in-focus degree by a predetermined correction coefficient that is greater than or equal to zero and less than one.

In the case where the correction of the local in-focus degrees in step S21 and in steps S14 and S15 described above is carried out by subtracting a predetermined amount of correction from the local in-focus degrees, the amount of correction in step S21 may be smaller than the amounts of correction in steps S14 and S15. In the case where the correction of the local in-focus degrees in step S21 and in steps S14 and S15 is carried out by multiplying the local in-focus degrees by a predetermined correction coefficient, the correction coefficient in step S21 may be greater than the correction coefficients in steps S14 and S15.

In other words, the degree of decrease in local in-focus degree for the above-described one second image in step S21 (i.e., the degree of decrease from the pre-correction local in-focus degree) is smaller than the degree of decrease in local in-focus degree for the saturated image group in step S14. Also, the degree of decrease in local in-focus degree for the above-described one second image in step S21 is smaller than the degree of decrease in local in-focus degree for the above-described one first image in step S15.

As described above, in the examples shown in Figs. 12 and 13, the aforementioned in-focus degree acquisition method further includes the step of correcting and lowering the local in-focus degree for one second image (in the above-described example, the target image G4) that is captured at the image capture position closest to the image capture positions of the saturated image group among the second image group (step S21). This reduces the influence of increase in luminance caused by the lens effect of the specimen 9 on the local in-focus degree for the one second image. Besides, the degree of decrease in local in-focus degree for the one second image is smaller than the degree of decrease in local in-focus degree for the above-described one first image in step S15. Accordingly, the degree of correction of the local in-focus degree for the one second image (i.e., the target image G4), in which the displacement distance of the specimen 9 from the in-focus position is small, is made lower than the degree of correction of the local in-focus degree for the above-described one first image (i.e., the target image G1), in which this displacement distance is relatively large. As a result, it is possible to favorably reduce the influence of increase in luminance caused by the lens effect of the specimen 9 on the target image G4 and to allow more favorable comparison of the local in-focus degrees among the target images G1 to G6. Besides, the omnifocal-image generator 504 can more favorably generate the omnifocal image.

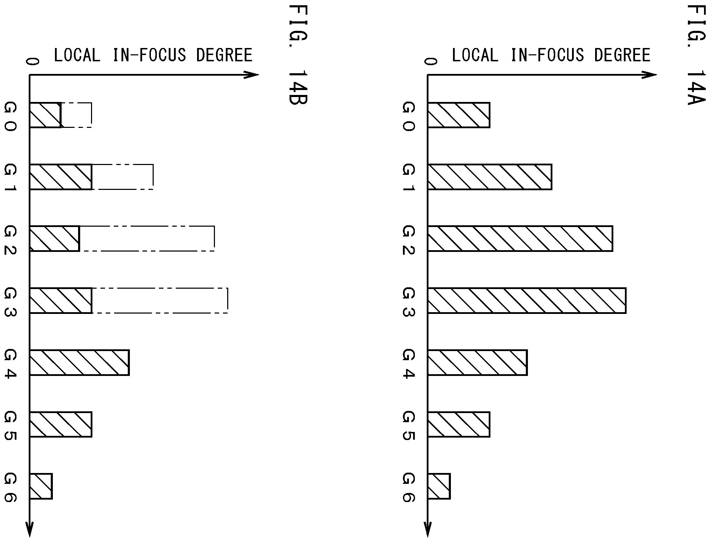

Although the first image group in the aforementioned example includes only one first image (i.e., the target image G1), the first image group may include a plurality of first images. For example, a target image G0 (not shown) is assumed to be acquired when the objective lens of the image capturer 13 is positioned at the same position in the up-down direction as the image capture position displaced by d toward the -Z side from the image capture position P1 (see Fig. 6). In this case, the target image G0 is also included in the first image group, in addition to the target image G1. Fig. 14A is a graph showing the pre-correction local in-focus degree of the local region 61 acquired for each of the target images G0 and G1 to G6, indicated by thick lines in Fig. 8. In Fig. 14A, the horizontal axis represents the target image (G0 and G1 to G6), and the vertical axis represents the pre-correction local in-focus degree.

In step S15 shown in Fig. 5, the correction of the local in-focus degree may also be made on another first image (i.e., the target image G0) that is captured at an image capture position that is the second closest to the image capture positions of the saturated image group among the first image group, next to the target image G1, in addition to the one first image (i.e., the target image G1) captured at the image capture position closest to the image capture positions of the saturated image group.

Fig. 14B is a graph showing the corrected local in-focus degree of the local region 61 selected for each of the target images G0 and G1 to G6 in step S12. In Fig. 14B, the horizontal axis represents the target image (G0 and G1 to G6), and the vertical axis represents the corrected local in-focus degree. In Fig. 14B, the pre-correction local in-focus degrees for the target images G0 and G1 to G3 are indicated by chain double-dashed lines. As in the case of correcting the local in-focus degree for the target image G1, the correction of the local in-focus degree for the target image G0 may be carried out by, for example, subtracting a predetermined value (i.e., the amount of correction) from the local in-focus degree or multiplying the local in-focus degree by a predetermined correction coefficient that is greater than or equal to zero and less than one.

In the case where the correction of the local in-focus degrees for the two first images (i.e., the target images G0 and G1) in step S15 is carried out by subtracting a predetermined amount of correction from the local in-focus degrees, the amount of correction subtracted from the local in-focus degree for the target image G0 is smaller than the amount of correction subtracted from the local in-focus degree for the target image G1. In the case where the correction of the local in-focus degrees for the two first images (i.e., the target images G0 and G1) in step S15 is carried out by multiplying the local in-focus degrees by a predetermined correction coefficient, the correction coefficient for multiplication of the local in-focus degree for the target image G0 is greater than the correction coefficient for multiplication of the local in-focus degree for the target image G1.

In other words, in step S15, the degree of decrease in local in-focus degree for the target image G0 is smaller than the degree of decrease in local in-focus degree for the target image G1. In yet other words, in step S15, the degree of decrease in local in-focus degree for each first image included in the first image group becomes smaller with increasing distance of the image capture position of the first image from the image capture positions of the saturated image group.

As described above, in the examples shown in Figs. 14A and 14B, the local in-focus degree for another first image (in the above-described example, the target image G0) in the first image group is also corrected and lowered in step S15, the other first image being captured at an image capture position that is the second closest to the image capture positions of the saturated image group, next to the above-described one first image (in the above-described example, the target image G1). This reduces the influence of increase in luminance caused by the lens actin of the specimen 9 on the local in-focus degree for the other first image. Besides, the degree of decrease in local in-focus degree for the other first image is smaller than the degree of decrease in local in-focus degree for the above-described one first image. Accordingly, the degree of correction of the local in-focus degree for the other first image (i.e., the target image G0), which is captured at the image capture position relatively far from the image capture positions of the saturated image group and relatively less affected by the lens effect of the specimen 9, is made lower than the degree of correction of the local in-focus degree for the above-described one first image (i.e., the target image G1) that is affected relatively greatly by the lens effect of the specimen 9. As a result, it is possible to favorably reduce the influence of increase in luminance caused by the lens effect of the specimen 9 on the target image G0 and to allow more favorable comparison of the local in-focus degrees among the target images G0 and G1 to G6. Moreover, the omnifocal-image generator 504 can more favorably generate the omnifocal image.

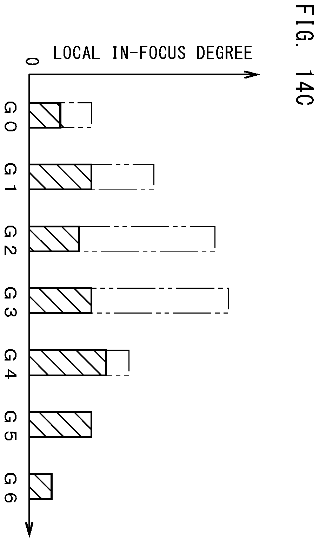

In the case of correcting the local in-focus degrees for the target images G0 and G1 to G6, as shown in Fig. 14C, it is also possible to correct and lower the local in-focus degree for the target image G4 (i.e., one second image that is captured at an image capture position closest to the image capture positions of the saturated image group among the second image group), in addition the local in-focus degrees for the target images G0 and G1 to G3. In this case, the degree of decrease in local in-focus degree for the target image G4 is lower than the degree of decrease in local in-focus degree for the target image G1.

This favorably reduces the influence of increase in luminance caused by the lens effect of the specimen 9 and allows yet more favorable comparison of the local in-focus degrees among the target images G0 and G1 to G6 in approximately the same manner as described above. Besides, the omnifocal-image generator 504 can yet more favorably generate the omnifocal image. Note that the degree of decrease in local in-focus degree for the target image G4 is lower than the degree of decrease in local in-focus degree for the target image G0. Alternatively, the degree of decrease in local in-focus degree for the target image G4 may be greater than or equal to the degree of decrease in local in-focus degree for the target image G0.

The in-focus degree acquisition method, the omnifocal-image generation method, and the program 572 described above may be modified in various ways.

In the above-described example, the target images G0 and G1 to G6 are transparent images of the specimen 9 serving as an image capture target, but the present invention is not limited to this example. For example, a plurality of target images may be fluorescent images of an image capture target.

In step S21, the correction of the local in-focus degree may be made on another second image (in the above-described example, the target image G5) captured at the image capture position that is the second closest to the image capture positions of the saturated image group among the second image group, in addition to the one second image (in the above-described example, the target image G4) captured at the image capture position closest to the image capture positions of the saturated image group. In step S21, the correction of the local in-focus degree may also be made on three or more second images that are captured at image capture positions closest to the image capture positions of the saturated image group among the second image group.

In step S15, the correction of the local in-focus degree may be made on three or more first images that are captured at image capture positions closest to the image capture positions of the saturated image group among the first image group. In the case of correcting the local in-focus degrees for the first images in the first image group and for the second images in the second image group, the number of first images for which the local in-focus degree is corrected may, for example, be greater than the number of second images for which the local in-focus degree is corrected.

The local in-focus degrees acquired by the aforementioned in-focus degree acquisition method are not necessarily be used for the generation of the omnifocal image, but may be used in various applications. For example, an appropriate image capture position of the image capturer 13 (i.e., an image capture position at which the specimen 9 is in focus) may be obtained automatically by using the corrected local in-focus degree of each local region 61 acquired for each of the target images G1 to G6 in step S12 to S16.

Specifically, for each of the target images G1 to G6, the in-focus degree of the image as a whole is calculated based on the corrected local in-focus degree of each local region 61. The in-focus degree can be calculated by any know method such as totaling the corrected local in-focus degrees of each local region 61. Then, a target image with the highest in-focus degree is selected from among the target images G1 to G6, and the image capture position of the target image is determined as an appropriate image capture position. Alternatively, the relationship between the in-focus degree and the image capture position of each of the target images G1 to G6 may be plotted and interpolated by, for example, secondary approximation, and an image capture position with the highest in-focus degree may be determined as an appropriate image capture position.

By acquiring an appropriate image capture position in accordance with the corrected local in-focus degrees in this way, it is possible to reduce the influence of increase in luminance caused by the lens effect of the specimen 9 on each target image and to achieve high-precision autofocusing.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

1 image capturing device
9 specimen
61 local region
572 program
G0, G1 to G6 target image
GA1 omnifocal image
J1 optical axis
P1 to P6 image capture position
S11 to S17, S21 step

## Claims

1. An in-focus degree acquisition method for acquiring a local in-focus degree for each of a plurality of target images (G1 to G6), the local in-focus degree indicating a degree of focusing on a predetermined local region (61), the plurality of target images being a plurality of images of an image capture target (9) each captured at a different displacement distance from an in-focus position,
said plurality of target images (G1 to G6) including:
a saturated image group (G2, G3) in which luminance of said local region (61) is saturated;
a first image group (G1) captured on one side in an optical axial direction, viewed from image capture positions of said saturated image group (G2, G3), the one side being a side toward which the displacement distance from the in-focus position increases; and
a second image group (G4 to G6) captured on the other side in said optical axial direction, viewed from said image capture positions of said saturated image group (G2, G3),
said in-focus degree acquisition method comprising:
a) calculating, for each of said plurality of target images (G1 to G6), the local in-focus degree in accordance with the luminance of said local region (61), the local in-focus degree indicating the degree of focusing on said local region (61) (S13);
b) correcting and lowering the local in-focus degree of said local region (61) for each saturated image in said saturated image group (G2, G3) (S14); and
c) correcting and lowering the local in-focus degree of said local region (61) for one first image (G1) in said first image group (G1), said one first image being captured at an image capture position that is closest to said image capture positions of said saturated image group (G2, G3) (S15).

2. The in-focus degree acquisition method according to claim 1, wherein
said operation c) (S15) further includes correcting and lowering the local in-focus degree for another first image (G0) in said first image group (G0, G1), said another first image (G0) being captured at an image capture position that is the second closest to said image capture positions of said saturated image group (G2, G3), next to said one first image (G1), and
a degree of decrease in the local in-focus degree for said another first image (G0) is less than a degree of decrease in the local in-focus degree for said one first image (G1).

3. The in-focus degree acquisition method according to claim 1, further comprising:
correcting and lowering the local in-focus degree for one second image (G4) in said second image group (G4 to G6), the one second image being captured at an image capture position that is closest to said image capture positions of said saturated image group (G2, G3) (S21),
wherein a degree of decrease in the local in-focus degree for said one second image (G4) is less than a degree of decrease in the local in-focus degree for said one first image (G1).

4. The in-focus degree acquisition method according to claim 3, wherein
said operation c) (S15) further includes correcting and lowering the local in-focus degree for another first image (G0) in said first image group (G0, G1), said another first image (G0) being captured at an image capture position that is the second closest to said image capture positions of said saturated image group (G2, G3), next to said one first image (G1), and
a degree of decrease in the local in-focus degree for said another first image (G0) is less than the degree of decrease in the local in-focus degree for said one first image (G1).

5. The in-focus degree acquisition method according to any one of claims 1 to 4, wherein
each of said plurality of target images (G1 to G6) is a transparent image of said image capture target (9).

6. An omnifocal-image generation method for generating an omnifocal image (GA1) from a plurality of target images (G1 to G6) that are a plurality of images of an image capture target (9) each captured at a different displacement distance from an in-focus position,
said omnifocal-image generation method comprising:
d) acquiring, for each of a plurality of local regions (61), a local in-focus degree for each of said plurality of target images (G1 to G6) by using the in-focus degree acquisition method according to any one of claims 1 to 5 (S12 to S 16), the plurality of local regions being equivalent to each of said plurality of target images (G1 to G6) as a whole; and
e) generating an omnifocal image (GA1) by determining luminance of each of said plurality of local regions (61) in accordance with the local in-focus degrees acquired for said plurality of target images (G1 to G6) (S 17).

7. A computer-readable program (572) for causing a computer to execute acquiring a local in-focus degree for each of a plurality of target images (G1 to G6), the local in-focus degree indicating a degree of focusing on a predetermined local region (61), the plurality of target images (G1 to G6) being a plurality of images of an image capture target (9) each captured at a different displacement distance from an in-focus position,
said plurality of target images (G1 to G6) including:
a saturated image group (G2, G3) in which luminance of said local region (61) is saturated;
a first image group (G1) captured on one side in an optical axial direction, viewed from image capture positions of said saturated image group (G2, G3), the one side being a side toward which the displacement distance from the in-focus position increases; and
a second image group (G4 to G6) captured on the other side in said optical axial direction, viewed from said image capture positions of said saturated image group (G2, G3),
said program (572) being executed by the computer to:
a) acquire, for each of said plurality of target images (G1 to G6), the local in-focus degree in accordance with the luminance of said local region (61), the local in-focus degree indicating the degree of focusing on said local region (61) (S13);
b) correct and lower the local in-focus degree of said local region (61) for each saturated image in said saturated image group (G2, G3) (S14); and
c) correct and lower the local in-focus degree of said local region (61) for one first image (G1) in said first image group (G1), said one first image being captured at an image capture position that is closest to said image capture positions of said saturated image group (G2, G3) (S15).
